# EUROPEAN PATENT SPECIFICATION

(11) **EP 2 378 179 B1**
(45) Date of publication and mention of the grant of the patent: **19.07.2017**
(21) Application number: 10425123.6
(22) Date of filing: 16.04.2010
(51) Int. Cl.: F16L 55/105, F16L 55/124, F16K 7/10

(54) **APPARATUS FOR BLOCKING FLUID FLOW IN A PIPE LINE**
VORRICHTUNG ZUR SPERRUNG VON FLUIDSTROM IN EINER ROHRLEITUNG
APPAREIL SERVANT A BLOQUER UN DEBIT DE FLUIDE DANS UNE CANALISATION

(43) Date of publication of application: 19.10.2011
(73) Proprietor: I.S.I.F. S.R.L., 52020 Castelfranco di Sopra (AR) (IT)
(72) Inventor: Odori, Mauro, 52020 Castelfranco di Sopra (AR) (IT)
(74) Representative: Ruzzu, Giammario

(56) References cited:
- US-A- 1 181 984
- US-A- 3 774 646
- US-A- 3 800 833
- US-A- 4 040 450
- US-A1- 2008 017 390

## Description

### FIELD OF INVENTION

This invention relates to equipments for execution of interventions of installation, repair, maintenance on pressure fluid supply piping (for example methane, water, hydrocarbons, etc.) without interrupting the service and with no fluid waste in the environment.

### BACKGROUND OF THE INVENTION

Any intervention on pressure fluids supply piping in service that needs steel piping to be cut and then jointed by welding obliges the operators to stop the flow upstream and downstream the intervention area by means of proper plugging machines available on the market (not to stop the service a by-pass pipe is assembled connecting the machines). Plugging machines are assembled on the pipe object of the intervention by means of proper shaped fittings and valves (with great dimensional ranges) that are welded to the pipe.

Plugging machines available on the market are conceived according to possible operating principles: in the first, the plug is made by a steel body coated with rubber that is inserted (through the fitting and the valve) inside the pipe, and it's the same pressure of the fluid that forces the rubber against the inner surface of the pipe obtaining the seal; in the second, the plug is composed by two steel disks (with a rubber gasket between them) inserted inside the pipe by means of a steel rod: through the rod is possible to operate a taper gear system that brings the disks near making them press the gasket against the inner surface of rod that can be insufficiently sized for high pressures. Moreover, with high pressured fluids, the rubber gasket can be "extruded" (that is can be extracted from the disks by the pressure), and the whole plug can "twist" (that is, it can rotate around the insertion rod and the plugging is this way suddenly removed).

**Examples of machines similar to the one object of the present Patent Application can be found in the following documents:**
D1 - US 1 181 984 A **- The machine object of this invention presets much of the main features of the one proposed by in this application, with the difference that the former is a merely Test Plug equipment and not a machine able to perform interventions fitting which is absolutely necessary to perform intervention on pressured pipes without interruption of the s 3 lines 7 to 10). Moreover, the machine depicted in D1 is not equipped with any device for avoiding the extrusion of the plug (the basis for this amendment can be find in the description as originally filed on page 4 lines 5 to 8).**
D2 - US 2008/017390 A1 **- The machine object of this Invention presents much of the main features of the or mbly fitting which is absolutely necessary to perform intervention on pressured pipes without interruption of the service (the basis for this amendment can be find in the description as originally filed on page 3 lines 7 to 10). Moreover, the protection against seal element extrusion obtained by means of annular springs has the drawback that It actuates, while operating, a strength that is contrary to the one which presses the seal element against the inner wall of the pipe to be sealed, with the result that the sealing is weakened.**
D3 - US 4 040 450 A **- The machine object of this Invention presents some of the main features of the bly fitting which is absolutely necessary to perform intervention on pressured pipes without interruption of the service (the basis for this amendment can be find in the description as originally filed on page 3 lines 7 to 10). Moreover, the machine depicted in D3 is not equipped with any device for avoiding the extrusion of the plug (the basis for this amendment can be find In the description as originally filed on page 4 lines 5 to 8).**
D4 - US 3 800 833 A **- The machine object of this Invention presents some of the main features of the bly fitting which is absolutely necessary to perform intervention on pressured pipes without interruption of the ser to 10). Moreover, the machine depicted in D3 is not equipped with any device for avoiding the extrusion of the plug (the basis for this amendment can be find in the description as originally filed on page 4 lines 5 to 8).**
D5 - US 3 774 646 A **- The machine object of this Invention presents some of the main features of the bly fitting which is absolutely necessary to perform intervention on pressured pipes without interruption of the service the basis for this amendment can be find in the description as originally filed on page 3 lines 7 to 10). Moreover, the machine dedicated in D3 is not equipped with any device for avoiding the extrusion of the plug the basis for this amendment can be find in the description as originally filed on page 4 lines 5 to 8).**

### BRIEF DESCRIPTION OF THE DRAWINGS

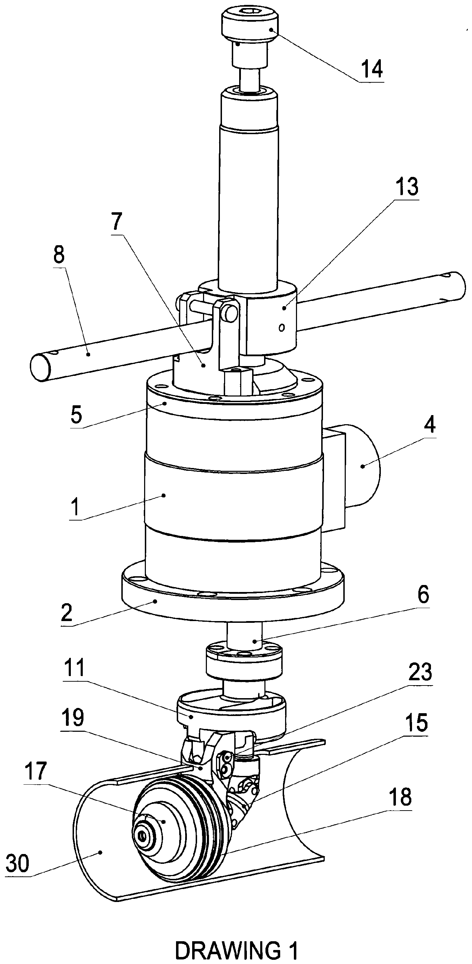

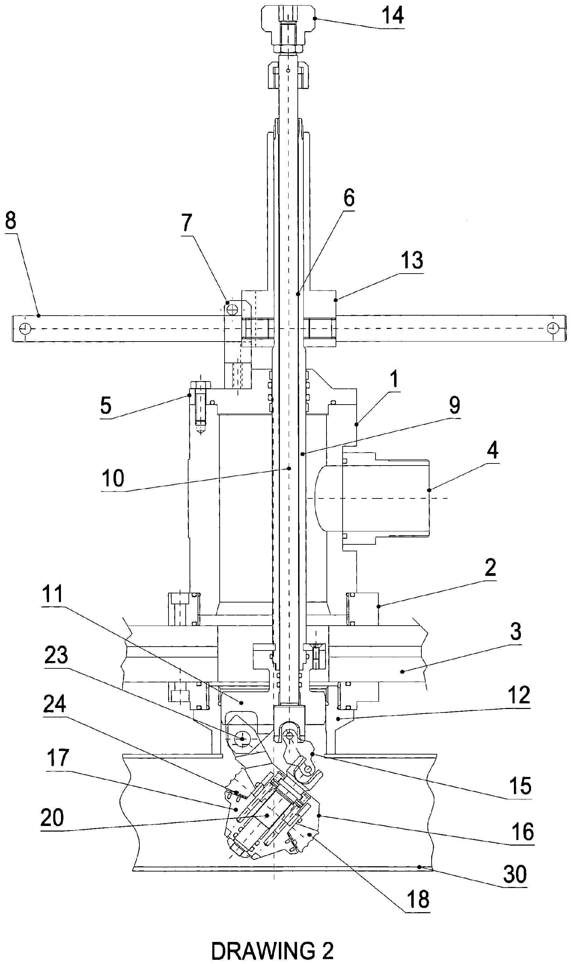

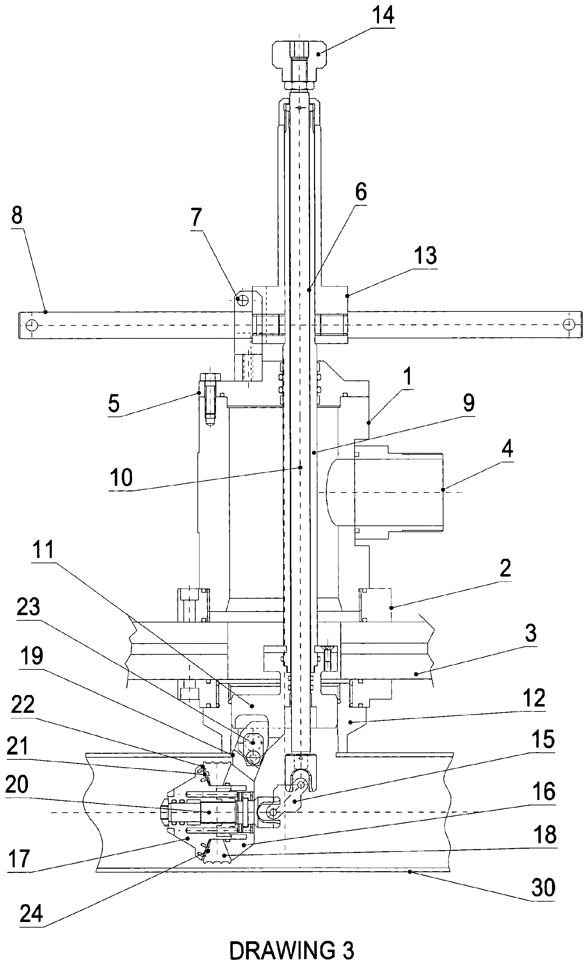

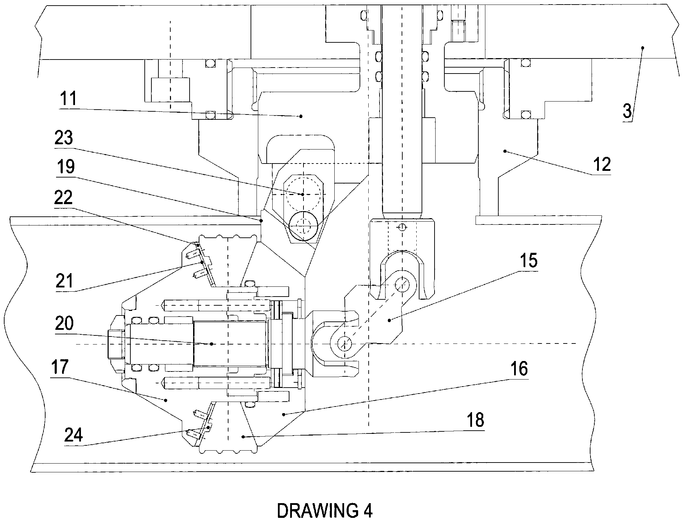

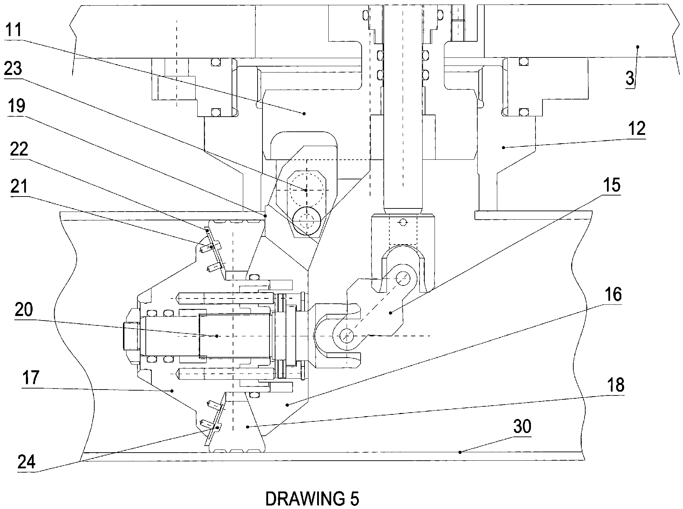

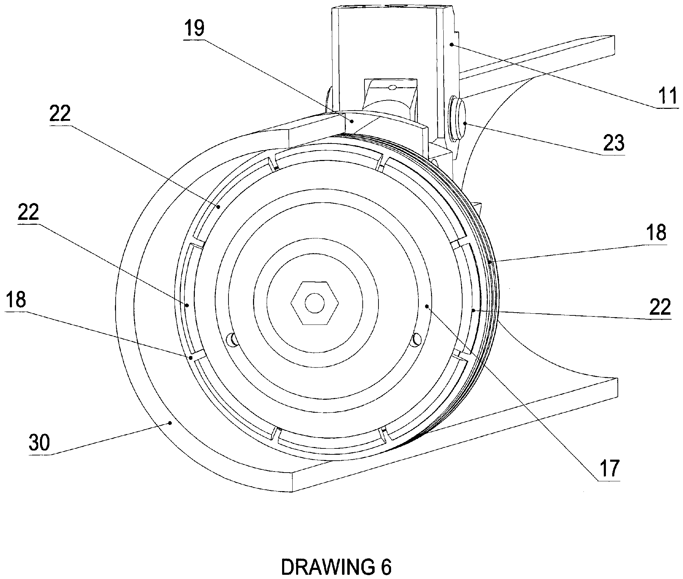

The drawings that are referred to in the following are relative to one of the possible embodiments of the invention: what is disclosed in the drawings and in the following descriptions is not to be considered a limitation to different possible embodiments and applications of the same invention.
Drawing 1 - Fig.1: is shown a typical perspective view of the plugging machine
Drawing 2 - Fig.2: is shown a sectional view of the plugging machine in which it is assembled on a fitting/valve and the plug is inserted in the pipe but not positioned.
Drawing 3 - Fig.3: is shown a sectional view of the plugging machine in which it is assembled on a fitting/valve and the plug is inserted and positioned in the pipe but not expanded.
Drawing 4 - Fig.4: is shown an enlarged sectional view of the plug positioned but not expanded.
Drawing 5 - Fig.5: is shown an enlarged sectional view of the plug positioned and expanded.
Drawing 6 - Fig.6: is shown a front view of the expanded plug.

### DESCRIPTION OF THE INVENTION

In the following disclosure numerical references are used to the figures described above. The one described in the following is only one of the possible embodiments of the plugging machine object of this invention, and is, so, not intended to be exhaustive or to limit the realization of the invention to the embodiment here described: its purpose is simply that of disclosing at best the principle of the invention and its possible practical applications, and to make a person skilled in the technique be able to carry it out.

This invention belongs to the technical field of the equipments for executing installation, repair, maintenance interventions on pressured fluids supply piping without interrupting the service. This invention aims to solve, by means of innovative technical solutions, the problems of the machines employed normally employed that have been pointed out in the preceding discussion.

The plugging machine object of this invention is composed by the following main components:
- **A cylindrical supporting structure (1) that has in its lower part the flanue (2) for the assembly on the valve/fitting (3) welded on the pipe (30); in the central part the welded fitting (4) for the assembly of the by-pass duct which allows the continuity of the service during the intervention with another identical machine mounted on the other side of the intervention area and the fitting for the ventilation valve; In the upper part the flange (5) for the assembly of the plug insertion and positioning steel rod (6) through which the rod can slide in an eccentric hole equipped with the necessary sealing gaskets: the flange presents, moreover, two supports (7) with holes for rotation and vertical translation movements prevention of the rudder (8) of the plug insertion and positioning steel rod (6).**
- The plug insertion and positioning steel rod (6) is composed by a tubular bar (9) and a cylindrical rod (10) that can slide inside of it with the necessary sealing gaskets. The tubular bar (9) is connected in its lower part to a cylindrical steel body (11) which, with the plug inserted, is positioned inside the fitting (12) with a less than 2mm gap, so preventing that the rod (6) can move in horizontal translation; in its central part to the assembly element (13) of the rudder (8) on the tubular bar (9). The cylindrical rod (10) is linked in its upper end to the knob (14) by means of which it can be rotated around its axis, moved inside the cylindrical steel body (11) through an eccentric holes equipped the necessary sealing gaskets out of the tubular bar (9); in its lower end to the universal joint (15).
- The plug body is composed by a tapered back steel disk (16), a tapered front steel disk (17) and a rubber gasket (18) between them. The back disk (16) is hinged (23) to the cylindrical steel body (11) and has a beating (19) on the cut edge of the pipe (30); inside the tapered back disk (16) can rotate a worm screw (20), driven by the universal joint (15) linked to the tubular bar (9) of plug positioning rod (6), that makes the tapered front disk (17) get nearer (or get away). The tapered front disk (17) has an inner threaded hole inside of which the rotation of the worm screw (20) determines its translation; on the tapered surface (21) of the disk (17) can slide in radial direction a system of steel plates (22), properly shaped and guided, that have the aim to avoid the extrusion of the rubber (18). The rubber gasket (18) is a trapezium-section ring shaped in such a way that, when the tapered disks (16-17) are brought nearer, it is compressed on its inclined sides and it's, so, obliged to enlarge in radial direction towards the inner surface of the pipe (30): when the rubber (18) is forced against the wall of the pipe (30), the sealing is obtained. On the inclined side of the gasket (18) in touch with the front tapered disk (17) there's a hook-up (24) by means of which the gasket (18), in its radial expansion, can drag the anti-extrusion steel plates (22) that slide on the tapered surface of the front disk (17).

With reference to the prior art like above described, it is quite clear how, with this invention, innovative technical solutions are introduced that can grant the solution to the main drawbacks shown in the machines currently employed. In particular: the assembly of the plug hinged to the cylindrical steel body (11) and its operation by the universal joint (15) make the plug insertion rod (6) be not stiffly linked to the plug itself, so that the strength practiced by the pressure of the fluid on the plug is not supported by the rod (6), but rather on the cut edge of the pipe (30) and by the cylindrical steel body (11); the cylindrical steel body (11) prevents any translation of the rod (6), and consequently of the plug (which is, in addition, blocked also by the beating (19) on the cut edge of the pipe (30)), along the pipe (30) axis; the supports (7) with holes are able to avoid, once a proper steel pin is inserted in the holes, the rotation and vertical translation movements of the rudder (8) of the positioning steel rod (6). By means of the above disclosed technical expedients is quite prevented any displacement of the plug once it has been positioned and the gasket (18) has been expanded; moreover, the steel plates (22) are an effective protection against the rubber extrusion as they realize, sliding on the front disk (17) tapered surface (21) jointly with the gasket (18) to which they are liked by the hook-up (24), a barrier that follows the rubber in its expansion leaving uncovered only a small part (25) (no more than 3mm wide).

## Claims

1. A plugging machine for the execution of interventions of installation, repair, maintenance on pressure fluids supply piping (30) without interruption of the service, comprising: a cylindrical external frame consisting of a cylindrical supporting structure (1) fit to be flanged to a fitting valve (3) welded to said piping (30), an insertion and positioning steel rod (6), a plug (16, 17, 18, 20) hinged to said insertion and positioning steel rod (6) that can slide inside the cylindrical frame and said insertion and positioning steel rod (6) is mounted inside said cylindrical supporting structure (1) for positioning said plug (16, 17, 18, 20) in an operating position inside said piping (30);
a mechanical device for operating two tapered disks, a back disk (16) and a front disk (17) of said plug (16, 17, 18, 20), for pressing a rubber gasket (18) of the same plug (16, 17, 18, 20) between them on an inner wall of said piping (30), thus sealing the same from fluid leakage;
said insertion and positioning rod (6) comprising a tubular bar (9) supported by said cylindrical supporting structure (1), and a cylindrical inner rod (10) slidably mounted inside said tubular bar (9) and free to rotate inside the same, and the plugging machine further comprising a cylindrical steel body (11) mounted at the lower end of said tubular bar (9) so as to fit into said fitting valve (3), a hinge (23) being provided on said back disk (16) to hinge said plug (16, 17, 18, 20) to said cylindrical steel body (11), and a universal joint (15) being moreover provided to link said plug (16, 17, 18, 20) to the lower end of said cylindrical inner rod (10), so that said plug insertion and positioning rod is not stiffly linked to the plug;
the plugging machine being **characterized in that** said back disk (16) is provided its part close to the said hinge (23) with a stop surface (19) fit to engage a cut edge of said piping (30) for blocking said plug (16, 17, 18, 20) along the piping (30) axis, and **in that** a rudder blocking device (8) composed by a proper steel pin and drilled supports (7) in which is inserted the proper steel pin is provided for preventing any vertical translation of said insertion and positioning rod (6) and any rotation of the same around its own axis.

2. A plugging machine according to claim 1 **characterized in that** said plug insertion and positioning rod (6) can slide inside said cylindrical supporting structure (1) along its longitudinal axis and through a hole eccentric with respect to the axis of said cylindrical supporting structure (1) itself.

3. A plugging machine according to claim 1 **characterized in that** on the lower end of the cylindrical rod (10) of the plug insertion and positioning rod (6), said universal joint (15) is fastened that can operate an axis 90° inclined with respect to the one of the rod (10).

4. A plugging machine according to claim 3 **characterized in that** on the other end of the universal joint (15) is fastened a worm screw (20) whose rotation makes the front tapered disk (17) come nearer to the back tapered disk (16), and makes the rubber gasket (18) be pressed against the piping (30) inner wall so obtaining the sealing.

5. A plugging machine according to claim 4 **characterized in that** a plurality of steel plates (22) is mounted on said rubber gasket (18), forming a radial crown, by means of hook-up (24), said plates being fit to slide on the tapered surface (21) of said front disk (17), so that only a small part (25) of the gasket (18) remains uncovered.

6. A plugging machine according to claim 5 **characterized in that** said cylindrical steel body (11), being inserted with a very narrow clearance inside said fitting valve (3) welded on the piping (30), prevents, in fact, any translation movement of the insertion and positioning rod (6) and of said plug (16, 17, 18, 20) along the axis of the piping (30).

## Patentansprüche

1. Eine Absperrvorrichtung für die Durchführung von Installation-, Reparatur-, Wartungsarbeiten auf Druckflüssigkeit Rohrleitung (30) ohne Unterbrechung der Dienstleistung, bestehend aus: ein zylindrischer Außenrahmen, der aus einem an einem Sitzventil (3), das mit der Rohrleitung (30) verschweißt ist, angeflanscht, zylindrischen Tragwerk (1) bestehet, Eine Einsetz- und Positionierstahlstange (6) die innerhalb des zylindrischen Rahmens gleiten kann, ein Stopfen (16, 17, 18, 20), der an der Einsetz- und Positionierstahlstange (6) angelenkt ist, und die Einsetz- und Positionierstahlstange (6) innerhalb der zylindrischen Tragwerk (1) zum Positionieren des Stopfens (16, 17, 18, 20) in einer Betriebsstellung innerhalb der Rohrleitung (30) angebracht ist;
eine mechanische Vorrichtung zum Betätigen von zwei sich verjüngenden Scheiben, nämlich eine hintere Scheibe (16) und eine vordere Scheibe (17) des Stopfens (16, 17, 18, 20), die zum Drücken einer Gummidichtung (18) desselben Stopfen (16, 17, 18, 20) zwischen ihnen auf eine Innenwand der Rohrleitung (30) und damit diesen gegen Auslaufen von Flüssigkeit abdichten vorgesehen sind;
wobei die Einsetz- und Positionierstange (6) einen rohrförmigen Stab (9), der von der zylindrischen Tragkwerk (1) getragen wird, und eine innerhalb des rohrförmigen Stabes (9) verschiebbar und frei drehbaren gelagert zylindrische Innenstange (10) aufweist, und wobei die Absperrvorrichtung ferner einen zylindrischen Stahlkörper (11), der am unteren Ende des rohrförmigen Stabes (9), um sich in das Montageventil (3) zu eingliedern, gelagert ist, mit einem Scharnier (23) an der hinteren Scheibe (16) vorgesehen um den Stopfen (16, 17, 18, 20) mit dem zylindrischen Stahlkörper (11) zu verbinden, und auch ein Kardangelenk (15) um den Stopfen (16, 17, 18, 20) mit dem unteren Ende der zylindrischen Innenstange (10) zu verbinden, aufweist, so dass die Einsetz- und Positionierstange nicht steif mit dem Stopfen verbunden ist;
wobei die Absperrvorrichtung **dadurch gekennzeichnet ist, daß** die hintere Scheibe (16) mit einer Anschlagfläche (19) an ihrem Teil nahe dem Scharnier (23) vorgesehen ist, die in eine Schnittkante der Rohrleitung (30) eingreift, um den Stopfen (16, 17, 18, 20) entlang der Rohrleitung (30) zu blockieren, und daß eine Ruderblockiervorrichtung (8), die aus einem geeigneten Stahlstift und gebohrten Stützen (7), in der der richtige Stahlstift eingesetzt wird, besteht, um eine vertikale Translation der Einsetz- und Positionierstange (6) und eine Drehung derselben um seine eigene Achse zu verhindern vorgesehen ist.

2. Eine Absperrvorrichtung nach Anspruch 1, **dadurch gekennzeichnet, daß** die Einsetz- und Positionierstange (6) des Stopfens innerhalb der zylindrischen Tragwerk (1), entlang seiner Längsachse und durch ein Loch, das exzentrisch in Bezug auf die Achse der zylindrischen Tragkwerk (1) ist, gleitet.

3. Eine Absperrvorrichtung nach Anspruch 1, **dadurch gekennzeichnet, daß** das Kardangelenk (15) am unteren Ende der zylindrischen Innenstange (10) zylindrischen der Einsetz- und Positionierstange (6) befestigt ist und eine Achse betätigen kanndie um 90° in Bezug auf die Innenstange (10) geneigt ist.

4. Eine Absperrvorrichtung nach Anspruch 3, **dadurch gekennzeichnet, daß** eine Schneckenschraube (20) am anderen Ende des Kardangelenks (15) befestigt ist, und durch die Drehung der Schraube die vordere, sich verjüngende Scheibe (17) der rückwärtigen Kegelscheibe (16) näher kommen wird, und die Gummidichtung (18) gegen die Rohrleitung (30) gedrückt wird, um die Abdichtung zu erhalten.

5. Eine Absperrvorrichtung nach Anspruch 4, **dadurch gekennzeichnet, daß** eine Mehrzahl von Stahlplatten (22) an der Gummidichtung (18) angebracht ist, wodurch eine radiale Krone mittels Haken (24) gebildet wird, wobei die Platten auf der konischen Oberfläche (21) der vorderen Scheibe (17) gleiten, so dass nur ein kleiner Teil (25) der Dichtung (18) frei bleibt.

6. Eine Absperrvorrichtung nach Anspruch 5, **dadurch gekennzeichnet, daß** der zylindrische Stahlkörper (11), der mit einem sehr engen Zwischenraum innerhalb des an der Rohrleitung (30) verschweißten Sitzventil (3) eingesetzt ist, jede Translationsbewegung der Einsetz- und Positionierstange (6) und des Stopfens (16, 17, 18, 20) entlang der Achse der Rohrleitung (30) verhindert.

## Revendications

1. Une machine d'obturation pour l'exécution d'interventions d'installation, de réparation, de maintenance sur les tuyaux d'alimentation des fluides de pression (30) sans interruption du service, comprenant: une armature externe cylindrique qui se compose d'une structure de support cylindrique (1) apte à être reliée à une soupape de raccord (3) soudée audit tuyaux (30), une tige d'acier d'insertion et de positionnement (6), une fiche (16, 17, 18, 20) articulée à la tige d'acier d'insertion et de positionnement (6) et qui peut glisser à l'intérieur de l'armature cylindrique et ladite tige (6) est montée à l'intérieur dudit structure de support cylindrique (1) pour positionner le bouchon (16, 17, 18, 20) dans une position de fonctionnement à l'intérieur dudit tuyau (30);
un dispositif mécanique pour le fonctionnement de deux disques coniques, un disque arrière (16) et un disque avant (17) dudit bouchon (16, 17, 18, 20), pour presser un joint en caoutchouc (18) du même bouchon (16, 17, 18, 20) entre eux et sur une paroi intérieure de ladite tuyaux (30), en scellant ainsi la fuite de fluide;
ladite tige d'insertion et de positionnement (6) comprenant une barre tubulaire (9) supportée par la structure de support cylindrique (1), et une tige intérieure cylindrique (10) montée coulissante à l'intérieur de la barre tubulaire (9) et libre de tourner à l'intérieur de la même, et la machine d'obturation comprenant en outre un corps en acier cylindrique (11) monté à l'extrémité inférieure de la barre tubulaire (9) pour se introduire dans la soupape de raccord (3), avec une charnière (23) prévue sur le disque arrière (16) pour articuler ledit bouchon (16, 17, 18, 20) au corps en acier cylindrique (11), et un joint universel (15) étant également prévu pour relier le bouchon (16, 17, 18, 20) à l'extrémité inférieure de la tige intérieure cylindrique (10), de sorte que la tige d'insertion et de positionnement du bouchon n'est pas rigidement liée au bouchon;
la machine d'obturation étant **caractérisé en ce que** ledit disque arrière (16) est pourvu d'une surface de butée (19) à sa partie proche de ladite charnière (23) apte à s'engager dans un bord coupé de ledit tuyau (30) pour bloquer ledit bouchon (16, 17, 18, 20) le long de l'axe du tuyau (30), et **en ce que** un dispositif de blocage de gouvernail (8), composé d'une tige en acier adéquate et de supports perforés (7) dans lesquels la tige en acier adéquate est insérée, est prévu pour empêcher toute translation verticale de la tige d'insertion et de positionnement (6) et toute rotation de celui-ci autour de son propre axe.

2. Une machine selon la revendication 1, **caractérisé en ce que** la tige d'insertion et de positionnement (6) du bouchon peut glisser à l'intérieur de la structure de support cylindrique (1) le long d'un axe longitudinal et à travers un trou excentrique par rapport à l'axe de la même structure de support cylindrique (1).

3. Une machine selon la revendication 1, **caractérisé en ce que** l'articulation universelle (15) est fixée sur l'extrémité inférieure de la tige cylindrique (10) de la tige d'insertion et de positionnement (6) du bouchon et peut faire fonctionner un axe 90° incliné par rapport à celui de la tige (10).

4. Une machine selon la revendication 3, **caractérisé en ce que** une vis sans fin (20) est fixée à l'autre extrémité de l'articulation universelle (15) et sa rotation fait que le disque conique avant (17) se rapproche du disque conique arrière (16), et fait que le joint en caoutchouc (18) soit pressé contre la paroi intérieure du tuyau (30) afin d'obtenir l'étanchéité.

5. Une machine selon la revendication 4, **caractérisé en ce que** une pluralité de plaques d'acier (22) est montée sur ledit joint en caoutchouc (18), formant une couronne radiale, au moyen d'une connexion (24), lesdites plaques doivent coulisser sur la surface conique (21) dudit disque avant (17), pour que seule une petite partie (25) du joint d'étanchéité (18) reste découverte.

6. Une machine selon la revendication 5, **caractérisé en ce que** ledit corps en acier cylindrique (11), qui est inséré avec un jeu très étroit à l'intérieur de ladite soupape de raccord (3) soudée sur le tuyau (30), empêche en fait tout mouvement de translation de la tige d'insertion et de positionnement (6) et dudit bouchon (16, 17, 18, 20) le long de l'axe du tuyau (30).
